(19) Europäisches Patentamt
European Patent Office
Office européen des brevets

(11) **EP 4 521 490 A1**

(12) **EUROPEAN PATENT APPLICATION**

(43) Date of publication:
**12.03.2025 Bulletin 2025/11**

(21) Application number: **24188545.8**

(22) Date of filing: **15.07.2024**

(51) International Patent Classification (IPC):
**H01M 4/525** (2010.01)    **H01M 10/052** (2010.01)
**H01M 4/131** (2010.01)    **H01M 4/02** (2006.01)

(52) Cooperative Patent Classification (CPC):
**H01M 4/525; H01M 4/131; H01M 10/052;**
**H01M 2004/021; H01M 2004/028; Y02E 60/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.09.2023   CN 202311148794**

(71) Applicant: **CALB Group Co., Ltd.**
**Changzhou City, Jiangsu Province (CN)**

(72) Inventors:
• **ZONG, Fengyi**
  **Changzhou City, Jiangsu Province (CN)**
• **HE, Leqiu**
  **Changzhou City, Jiangsu Province (CN)**
• **LI, Zhongzhong**
  **Changzhou City, Jiangsu Province (CN)**
• **CUI, Kui**
  **Changzhou City, Jiangsu Province (CN)**

(74) Representative: **Becker, Eberhard**
**Becker Kurig & Partner**
**Patentanwälte mbB**
**Bavariastraße 7**
**80336 München (DE)**

(54) **POSITIVE POLE PIECE, ELECTROCHEMICAL DEVICE INCLUDING THE  POSITIVE POLE PIECE, AND ELECTRONIC DEVICE**

(57)    The present invention discloses a positive pole piece, an electrochemical device including the positive pole piece, and an electronic device, and falls within the technical field of batteries. The positive pole piece includes a positive current collector and a positive active material layer provided on at least one surface of the positive current collector. The positive active material layer includes a ternary positive active material. The positive pole piece satisfies the following relationship: $1.2 \leq D/(R/5+P/2) \leq 3.5$. D is a particle size change rate of Dv50 before and after the positive active material is held for 30 seconds at a pressure of 35 KN, and Dv50 is a particle size corresponding to 50% of a volume cumulative distribution percentage of the positive active material. R is a roughness of the positive pole piece, and P is a porosity of the positive pole piece.

EP 4 521 490 A1

**Description**

**BACKGROUND**

Technical Field

The present invention relates to the field of electrochemical technology, and in particular to a positive pole piece, an electrochemical device including the positive pole piece, and an electronic device.

Description of Related Art

Lithium ion batteries have the advantages of high specific energy, light weight, long life and no memory effect, and are widely used in various civil electronic equipment and electric vehicles, energy storage, mobile power and other fields. With the wide range of applications of lithium ion batteries, the discharge performance of lithium ion batteries at low temperature has been more and more required.

At low temperature, the decrease of lithium ion transfer rate is the main reason for the decrease of lithium ion battery discharge efficiency. The properties of the positive material, the negative material, the electrolyte solution, and the current collector may all cause a decrease in the transmission rate of lithium ions. The influence of the positive material is relatively more important. At low temperature, the decrease in the conductivity of the electrolyte solution leads to a decrease in the lithium ion transport rate in the positive material and a decrease in the discharge capacity of the lithium ion battery at low temperature. For high nickel ternary positive materials, the lithium ion conductivity decreases at low temperature and also tends to lead to an increase in resistance, leading to a decrease in battery discharge performance and more pronounced problems at high rate discharges.

Therefore, it is of great significance to develop low-temperature lithium ion batteries that can be used in severe cold or fields in the north to expand the application fields and scope of lithium ion batteries.

**SUMMARY**

An object of the present invention is to overcome the disadvantages of the prior art and to provide a positive pole piece, an electrochemical device including the positive pole piece, and an electronic device. The low-temperature cycle capacity retention rate and low-temperature high-rate discharge performance of the electrochemical device can be significantlyl improved after the positive pole piece is applied to the electrochemical device.

In order to achieve the above-mentioned object, in a first aspect of the present invention, the present invention provides a positive pole piece including a positive current collector and a positive active material layer provided on at least one surface of the positive current collector. The positive active material layer includes a positive active material, and the positive active material includes a ternary positive material. A particle size change rate of the positive active material, the roughness of the positive pole piece and a porosity of the positive pole piece satisfy the following relationship:

$$1.2 \leq D/(R/5 + P/2) \leq 3.5$$

Wherein, D is the particle size change rate of Dv50 in % before and after the positive active material is held for 30 seconds at a pressure of 35 KN, and Dv50 is a particle size corresponding to 50% of a volume cumulative distribution percentage of the positive active material.

R is the roughness of the positive pole piece, in nm.

P is the porosity of the positive pole piece in %.

As a preferred embodiment of the present invention, the particle size change rate of the positive active material, the roughness of the positive pole piece, and the porosity of the positive pole piece satisfy the following relationship: $1.7 \leq D/(R/5 + P/2) \leq 2.5$.

As a preferred embodiment of the present invention, the particle size change rate (D) of the positive active material ranges from 60% to 90%.

As a more preferred embodiment of the present invention, the particle size change rate (D) of the positive active material ranges from 65% to 80%.

As a more preferred embodiment of the present invention, the roughness (R) of the positive pole piece ranges from 80 nm to 200 nm.

As a more preferred embodiment of the present invention, the roughness (R) of the positive pole piece ranges from 100 nm to 150 nm.

As a preferred embodiment of the present invention, the porosity (P) of the positive pole piece ranges from 15% to 35%.

As a more preferred embodiment of the present invention, the porosity (P) of the positive pole piece ranges from 18% to 25%.

As a preferred embodiment of the present invention, the particle size (Dv50) of the positive active material ranges from 3 μm to 8 μm.

As a preferred embodiment of the present invention, the ternary positive material has a formula of $LiNi_xCo_yMn_{(1-x-y)}O_2$, where $0.7 \leq x < 1$, $0 < y \leq 0.3$, and $0 < x+y < 1$.

In a second aspect, the invention provides an electrochemical device including the positive pole piece as described above.

In a third aspect, the present invention provides an electronic device including the electrochemical device as described above.

The invention has the following beneficial effects.

The present invention provides a positive pole piece, an electrochemical device including the positive pole piece, and an electronic device. By controlling the roughness of the positive pole piece, the porosity of the positive pole piece, and the particle size change rate of the positive active material, the present invention can significantly improve the low-temperature capacity retention rate and the low-temperature high-rate discharge performance of the electrochemical device after the positive pole piece is applied to the electrochemical device.

## DESCRIPTION OF THE EMBODIMENTS

In order to make the objectives, technical solutions, and advantages of examples of the invention clearer, the technical solutions in the examples of the invention will be described clearly and completely below. Obviously, the described examples are part of the invention, rather than all of the examples. Based on the examples in the invention, all other examples obtained by a person skilled in the art without involving any inventive effort are within the scope of protection of the invention.

In the present invention, among the technical features which are described in an open manner, it includes a closed technical solution consisting of the recited features as well as an open technical solution containing the recited features.

In the present invention, reference is made to numerical ranges which are, unless otherwise indicated, to be considered continuous and to include both the minimum and maximum values of the range, and every value between the minimum and maximum values. Further, when a range refers to an integer, every integer between the minimum and maximum values of the range is included. Further, when multiple ranges are provided to describe a feature or characteristic, the ranges can be combined. In other words, unless otherwise indicated, all ranges disclosed herein are to be understood to include any and all subranges subsumed therein.

In the present invention, the specific dispersion and stirring treatment methods are not particularly limited.

Where the reagents or instruments used in the invention are not specified by the manufacturer, they are conventional products commercially available.

It should be noted that, in the content of the present application, the present application is explained by using a lithium ion secondary battery as an example of an electrochemical device, but the electrochemical device of the present application is not limited to the lithium ion secondary battery.

Positive pole plate

An example of the present invention provides a positive pole piece including a positive current collector and a positive active material layer provided on at least one surface of the positive current collector. The positive active material layer includes a positive active material, and the positive active material includes a ternary positive material.

The particle size change rate D of the positive active material, the roughness R of the positive pole piece and the porosity P of the positive pole piece satisfy the following relationship:

$$1.2 \leq D/(R/5 + P/2) \leq 3.5$$

In the above relationship, D is the particle size change rate of Dv50 in % before and after the positive active material is held for 30 seconds at a pressure of 35 KN. R is the roughness of the positive pole piece, in nm, and P is the porosity of the positive pole piece in %.

In the present invention, the particle size change rate (D) of the positive active material is calculated from the change in the particle size (Dv50) of the positive active material before and after being held for 30 seconds at a pressure of 35 KN. In the present application, the positive active material includes primary particles and/or secondary particles, where "primary particles" denotes a primary structure of single particles, i.e., single-crystal type particles, and "secondary particle" means an aggregate in which primary particles are aggregated by physical or chemical bonding between primary particles, i.e., a secondary structure.

The particle size change rate of the positive active material is related to the particle strength of the positive active material and the degree of the secondary particle proportion (also equivalent to the degree of single crystallization). As the positive active material is subjected to the pressure, the secondary particles of the positive active material may be broken into a plurality of smaller-sized particles, or some deformation or breakage of the primary particles and/or the secondary particles may occur. In general, when the particle size change rate of the positive active material is low, it means that the higher the strength of the representative particle is, the more stable the layered structure is, or the lower the proportion of secondary particles is, the higher the degree of single crystallization is. The higher particle size change rate means a relatively low particle strength or a relatively higher proportion of secondary particles.

The particle size change rate of the positive active material should be in a suitable range. For the positive active material, a higher particle size change rate tends to mean that there are more pores and voids inside the positive active material layer, which may be generated by the rolling step during the preparation of the positive pole piece. The pores and voids inside the positive active material layer may be microscopic cracks, voids or cavities inside the positive active material particles, or may be gaps between particles. Due to the existence of pores and voids, the diffusion path of ions inside the particles is shortened, the ion intercalation/deintercalation rate is increased, and the high-rate discharge performance of lithium ion battery at low temperature is improved. In addition, during charging and discharging of the lithium ion battery, the positive active material undergoes volume expansion and contraction, and the higher particle size change rate can provide more space to accommodate the volume change, thereby reducing the risk of stress concentration and damage, and thus improving the electrochemical performance of the positive pole piece after long-term cycling at low temperature.

The particle size change rate of the positive active material should not be too high. The positive active material needs appropriate particle strength to ensure that the material has good structural strength and stability. At low low temperature, the material inside the battery tends to become brittle. A positive active material having an excessively high rate of change in particle size may fail to provide sufficient mechanical support due to its low structural strength and stability, thereby causing structural damage to the positive pole piece, and thus deteriorating the electrochemical performance of the battery at low temperature. In addition, in a low-temperature environment, the diffusion rate of ions is slowed down, resulting in a decrease in the electrochemical reaction rate of the battery. When the particle size change rate of the positive active material is too high, the proportion of secondary particles may be too large, resulting in a decrease in the density of the active material, affecting the charge and ion transport in the positive pole piece, thereby reducing the capacity of the battery at low temperature. The particle size change rate of the positive active material should not be too low. A too small particle size change rate is often related to the heterogeneity of the internal structure of the particles. Too strong bonding between the transition metal and oxygen leads to the increase of lithium ion transport potential. A too low particle size change rate may mean too few pores and voids inside the positive active material layer. A too long diffusion path of ions inside the particles is not conducive to the high rate discharge performance of lithium ion batteries at low temperature. In addition, when the particle size change rate is too low, the stress generated by the positive pole piece during repeated charge and discharge (lattice expansion/contraction) tends to concentrate locally, which is not conducive to long-term storage and use of the cell at low temperature.

The roughness of the positive pole piece and the porosity of the positive pole piece also have a great influence on the electrochemical performance of the battery at low temperature.

The roughness of the positive pole piece affects the contact performance between the electrode and the electrolyte solution. In a low temperature environment, the electrochemical reaction rate is slow. The appropriate roughness means that the contact area between the surface of the positive active material layer in the positive pole piece and the electrolyte solution is relatively larger, facilitating the transport of ions in the positive pole piece, promoting the electrochemical reaction at low temperature, and thus improving the low-temperature capacity retention rate of the battery. The roughness of the positive pole piece should not be too low, otherwise it is difficult to build a uniform and complete contact interface between the active particles and the electrolyte solution to ensure the normal migration of lithium ions. However, excessive roughness may cause excessive accumulation of the electrolyte solution on the surface of the highly oxidizing positive active material, and excessive side reactions of the electrolyte solution on the surface of the positive active material, thereby decreasing the capacity retention rate of the battery. Excessively-high roughness may also result in non-uniform electric field distribution on the surface of the positive pole piece, which aggravates the electrode polarization phenomenon. Especially at low temperature, the degree of electrode polarization generally increases, thereby affecting the electrochemical performance of the battery. In addition, theexcessively-high roughness may also mean that there are too many pores in the positive pole piece, resulting in decreased electrical connectivity and increased resistance, affecting the power output capability of the battery at low temperature.

The porosity of the positive pole piece mainly affects the diffusion space of the electrolyte solution and the contact area with the positive active material. Appropriate porosity may increase the contact area between the electrolyte solution and the positive active material, promote ion transport and reaction, and improve the electrochemical reaction efficiency at low temperature. However, theexcessively-high porosity is not conducive to the increase of the energy density of the cell, and also has the problem of excessive consumption of electrolyte solution. The excessively-high porosity may lead to the decrease of the electrical connectivity inside the positive pole piece, resulting in the decrease of the conductivity and increase of the resistance of the positive pole piece, thus affecting the high-rate discharge performance of the battery at low temperature. The porosity should not be too low, when the porosity is low, the electrolyte solution is difficult to flow inside the pole piece, resulting in uneven wetting, and areas where the electrolyte solution is over-enriched react excessively are prone to lithium precipitation, causing safety hazards. It causes safety risks by lithium seperated easily. However, in areas with insufficient wetting, lithium ion migration is hindered and gram capacity is abnormal.

With regard to the positive pole piece, the adjustment of the roughness of the positive pole piece and the porosity of the positive pole piece can be achieved by adjusting the particle size and shape, coating design, particle size distribution and stacking mode of the positive active material, or adjusting the coating and rolling conditions of the positive slurry during the preparation of the positive pole piece, or adjusting the addition of components such as a binder and a dispersant in the positive active material layer, or performing surface treatment and filling treatment on the positive pole piece.

In addition, the particle size change rate of the positive active material, the roughness of the positive pole piece and the porosity of the positive pole piece also have a certain interaction. If the porosity of the positive pole piece is high, the surface of the positive pole piece may exhibit a certain concave-convex structure, so that the roughness of the positive pole piece increases. The particle size change rate of the positive active material reflects the particle strength and the proportion of secondary particles of the positive active material. The degree of the proportion of secondary particles will affect the size of porosity and the roughness. The particle strength will affect the generation of micro-cracks, voids or cavities in the particles of the positive active material, and thus also affect the porosity of the positive pole piece.

Considering that the particle size change rate of the positive active material, the roughness of the positive pole piece and the porosity of the positive pole piece all affect the electrical performance of the battery at low temperature to a certain extent, and have a certain mutual influence. It is difficult to achieve the battery with both high capacity retention at low temperature and high rate discharge performance at low temperature by controlling a single variable. In the present invention, by rationally controlling the particle size change rate D of the positive active material, the roughness R of the positive pole piece and the porosity P of the positive pole piece, it satisfies the relationship: $1.2 \leq D/(R/5+P/2) \leq 3.5$, so that the battery containing the positive pole piece has a high capacity retention rate at low temperature and has a good low-temperature high-rate discharge performance.

Exemplarily, in the present invention, the value of $D/(R/5+P/2)$ may be 1.2, 1.3, 1.5, 1.6, 1.8, 2.0, 2.5, 2.8, 3.0, 3.2, 3.4 and 3.5, or an interval range of any two of the above values.

In an implementation, the particle size change rate D of the positive active material, the roughness R of the positive pole piece, and the porosity P of the positive pole piece satisfy the following relationship: $1.7 \leq D/(R/5+P/2) \leq 2.5$.

In an implementation, the particle size change rate D of the positive active material ranges from 60% to 90%. For example, the D is 60%, 62%, 65%, 70%, 75%, 80%, 85%, 88%, and 90%.

In a preferred implementation, the particle size change rate D of the positive active material ranges from 65% to 80%.

Within the above-mentioned particle size change rate range, the positive active material has a suitable particle strength and the proportion of secondary particles, which can ensure that the positive pole piece has good structural strength and stability, and at the same time, can make the positive pole piece have suitable pores and voids, contributing to the improvement of high-rate discharge performance and capacity retention rate of the battery at low temperature.

With regard to the method for detecting the particle size change rate D, the present invention is not limited, and a person skilled in the art would have been able to detect the particle size change rate of the positive active material according to conventional technical means. Exemplarily, D can be detected using the following method.

The lithium ion battery is disassembled to obtain a positive pole piece. The positive pole piece is soaked in DMC (dimethyl carbonate) at normal temperature for 60 min. The same is taken out and dried at normal temperature with a humidity of $\leq 15\%$. The positive active material layer is scraped off the surface of the current collector to perform calcination at 500°C for 3 hours, so as to remove the conductive agent, binder, surface side reaction products and residual electrolyte solution, and obtain the positive active material after post-treatment.

The positive active material is dispersed in an aqueous solution containing 3% sodium hexametaphosphate dispersant, and the same is continuously stirred with a glass rod for 10 cycles. All the samples are quickly poured into a sample pool for a particle size distribution instrument test to perform a Dv50 test, and obtain a Dv50 before pressure holding, recorded as $D_V50_{before}$ pressure.

Then the solid-liquid separation and drying on the mixture containing the positive active material is performed to obtain the positive active material again, and the positive active material is kept under a pressure of 35 KN for 30 seconds by the powder compactor. After the pressure is maintained, the positive active material is taken out to perform a Dv50 test again in a particle size tester according to the above-mentioned method to obtain a Dv50 after the pressure is maintained,

recorded as $D_V50_{after\ pressure}$.

The particle size change rate D of the positive active material can be obtained by calculation:

$$D = |(D_V50_{before\ pressure} - D_V50_{after\ pressure})|/D_V50_{before\ pressure} \times 100\%$$

In the above calculation, Dv50 is the particle size in $\mu m$ corresponding to 50% of the volume cumulative distribution percentage of the positive active material.

The particle size change rate of the positive active material is related to various factors, and can be controlled by changing the precursor of the positive active material, the pulverization conditions and the heat treatment conditions in the preparation process. It is also possible to obtain a positive active material having a specific particle size change rate by mass screening.

In an implementation, the positive pole piece has a roughness R in the range of 80 nm to 200 nm. For example, the R can be 80 nm, 90 nm, 100 nm, 120 nm, 150 nm, 180 nm, 190 nm and 200 nm.

In a preferred implementation, the positive pole piece has a roughness R in the range of 100 nm to 150 nm.

When the roughness is within the above-mentioned preferred range, the positive pole piece has good contact performance with the electrolyte solution, the battery has high electrochemical reaction efficiency, and the electrode polarization phenomenon is not aggravated. The battery has a high low-temperature capacity retention rate and low-temperature high-rate discharge performance.

With regard to the method for detecting the roughness R, the present invention is not limited, and a person skilled in the art would have been able to detect the roughness of the positive pole piece according to conventional technical means. For example, R can be detected by the following method.

The lithium ion battery is disassembled to obtain a positive pole piece. The disassembled positive pole piece is soaked in a solvent (DMC) to clean the residual electrolyte solution. The solvent is replaced once every 4 hours. The residual electrolyte solution is continuously cleaned for 3 times. The positive pole piece is taken out and dried to obtain a pole piece sample.

A clean and flat 40 mm × 40 mm pole piece sample is selected and fixed on an atomic force microscope sample platform. It contacts the surface of the positive active material layer of the pole piece sample via an atomic force microscope probe and automatically scanning same. After the test is completed, the roughness of the pole piece sample is obtained via a "image Ra" value in a "result" of a software test. At least three different places of the same pole piece sample are selected for parallel testing, and the average value is calculated, namely, the roughness of the positive pole piece.

In an implementation, the positive pole piece has a porosity P in the range of 15% to 30%. For example, the P may be 15%, 16%, 18%, 20%, 23%, 25%, 28%, 29%, 30%.

In an preferred implementation, the porosity P of the positive pole piece ranges from 18% to 25%.

In the present invention, the method for detecting the porosity P is not limited. A person skilled in the art would have been able to detect the porosity of the positive pole piece according to conventional technical means. By way of example, P can be detected using the following method.

The lithium ion battery is disassembled to obtain a positive pole piece. The disassembled positive pole piece is soaked in a solvent (DMC) to clean the residual electrolyte solution. The solvent is replaced once every 4 hours. The residual electrolyte solution is continuously cleaned for 3 times. The positive pole piece is taken out, dried and cutt into a 12mm-diameter wafer using a sheet punching machine to obtain a pole piece sample.

A 12mm-diameter wafer pole piece sample is weighted. The pole piece sample is placed in the hexadecane solution and soaked for 1 hour, and then taken out. After blotting the solution on the surface of filter paper, the pole piece sample is weighed again. The change rate of the mass of the pole piece sample before and after soaking in hexadecane is calculated, namely, the porosity of the positive pole piece.

In an implementation, the particle size Dv50 of the positive active material is 3 $\mu m$ to 8 $\mu m$.

In a preferred implementation, the particle size Dv50 of the positive active material ranges from 5 $\mu m$ to 7.5 $\mu m$.

When the particle size Dv50 of the positive active material is within the above-mentioned preferred range, the positive pole piece has higher capacity performance and energy density at low temperature, and better large-rate discharge capacity.

In an implementation, the ternary positive material has the formula of $LiNi_xCo_yMn_{(1-x-y)}O_2$, where $0.7 \leq x < 1$, $0 < y \leq 0.3$, and $0 < x+y < 1$.

In the present invention, the preparation method of $LiNi_xCo_yMn_{(1-x-y)}O_2$ is not limited. A person skilled in the art would be able to prepare a positive active material according to conventional technical means. Exemplarily, the positive active material precursor and the lithium source are mixed and subjected to a sintering treatment to obtain a positive active material.

The positive active material precursor may be one or more of oxides, hydroxides and carbonates containing Ni, Co and Mn in a stoichiometric ratio, for example, hydroxides containing Ni, Co and Mn in the stoichiometric ratio. The positive active material precursor can be obtained by a method known in the art, for example, by a co-precipitation method, a gel method, or a solid phase method.

As an example, a Ni source, a Co source and a Mn source are dispersed in a solvent to obtain a mixed solution. The mixed solution, the strong base solution and the complexing agent solution are pumped simultaneously into a stirred reaction kettle by means of a continuous parallel flow reaction, with the pH value of the reaction solution controlled to be 10-13, and the temperature in the reaction kettle to be 25°C -90°C. The mixture is protected by an inert gas during the reaction. After completion of the reaction, aging, filtration, ishing and vacuum drying is performed to give hydroxide containing Ni, Co and Mn.

In some examples of the invention, the Ni source includes at least one of nickel sulfate, nickel nitrate, nickel chloride, nickel oxalate, or nickel acetate, and/or the Co source includes at least one of cobalt sulfate, cobalt nitrate, cobalt chloride, cobalt oxalate, or cobalt acetate; and/or the Mn source includes at least one of manganese sulfate, manganese nitrate, manganese chloride, manganese oxalate or manganese acetate, and/or the Li source includes at least one of lithium oxide (LisO), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), or lithium nitrate ($LiNO_3$).

The positive active material precursor and the lithium source may be mixed using a ball mill mixer or a high speed mixer. The mixed material is introduced into an atmospheric sintering furnace for sintering. The sintering atmosphere is an oxygen-containing atmosphere, such as an air atmosphere or an oxygen atmosphere.

In addition, the positive active material may also be subjected to a coating process. Specifically, a coating material is coated on the surface of the positive active material by dry coating (high temperature solid phase method). The surface of the positive active material is partially or fully coated with a coating layer formed by the coating material. The coating layer includes at least one element (hereinafter, referred to as "coating element") selected from the group consisting of aluminum (Al), titanium (Ti), tungsten (W), boron (B), phosphorus (P), cobalt (Co), yttrium (Y), and silicon (Si).

In addition to the positive active material, the positive active material layer may further contain a conductive agent and a binder

The conductive agent is used to provide electrical conductivity in the electrode. Any conductive agent may be used without particular limitation as long as it has suitable electronic conductivity without causing adverse chemical changes in the battery, including, preferably, carbon fibers such as carbon nanofibers, carbon black such as acetylene black and Ketjen black, and carbon materials such as activated carbon, graphite, mesoporous carbon, fullerenes, and carbon nanotubes.

The binder improves adhesion between positive active material particles and adhesion between the positive active material and the current collector. Thus, suitable binders for use in implementations are fluoropolyolefin-based binders that may include, but are not limited to, polyvinylidene fluoride (PVDF), vinylidene fluoride copolymers or modified (e.g., carboxylic acid, acrylic acid, acrylonitrile, etc.) derivatives thereof, and the like.

In the present invention, the positive current collector is not particularly limited as long as it has electrical conductivity without causing adverse chemical changes in the battery, and the positive current collector includes, for example, stainless steel, aluminum, nickel, titanium, fired carbon, or aluminum or stainless steel that has been surface treated with one of carbon, nickel, titanium, silver, etc.

In the present invention, the positive pole piece can be prepared according to conventional methods in the art. For example, a positive active material, a conductive agent and a binder are dispersed in a solvent. The solvent can be N-methylpyrrolidone NMP or deionized water to form a uniform positive slurry. The positive slurry is coated on a positive current collector. After drying, rolling and the like, a positive pole piece is obtained.

Electrochemical device

In accordance with an example of the present invention, an electrochemical device is provided. The electrochemical device includes the positive pole piece as described above, a negative pole piece and an electrolyte solution.

The negative pole piece of the present invention includes an negative current collector and an negative active material layer provided on at least one surface of the negative current collector. The negative active material includes an negative active material and may also include conductive agents and/or binders.

The negative current collector is not particularly limited in the present invention as long as it has high conductivity without causing adverse chemical changes in the battery. For example, copper, stainless steel, aluminum, nickel, titanium, carbon fired, copper or stainless steel surfacetreated with one of carbon, nickel, titanium, silver, or the like, or an aluminum-cadmium alloy may be used.

As for the negative electrode active material, the examples of the present invention do not specifically limit the kind of the negative electrode active material, and can be selected according to practical requirements. By way of example, the negative electrode active material may be one or more of natural graphite, artificial graphite, mesophase carbon microspheres (MCMB), hard carbon, soft carbon, silicon, silicon-carbon composite, SiOm (0<m<2, such as m=1), Li-Sn alloy, Li-Sn-O alloy, Sn, SnO, $SnO_2$, spinel-structured lithium titanate $Li_4Ti_5O_{12}$, Li-Al alloy, and metallic lithium.

Examples of the present invention do not specifically limit the kinds of the conductive agent and the binder in the negative electrode active material layer, and may be selected according to practical requirements. By way of example, the conductive agent is one or more of graphite, superconducting carbon, acetylene black, carbon black, ketjen black, carbon dots, carbon nanotubes, graphene, and carbon nanofibers. The binder is one or more of styrene-butadiene rubber, polyvinylidene fluoride, polytetrafluoro ethylene, polyvinyl butyral, aqueous acrylic resin, and carboxymethyl cellulose. The negative active material layer may also optionally include a thickener such as carboxymethyl cellulose.

The electrolyte solution of the present invention may be any electrolyte solution suitable in the art for use in electrochemical energy storage devices. The electrolyte solution includes an electrolyte and a solvent. The electrolyte solution may generally include a lithium salt.

Specifically, the lithium salt includes at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI), lithium bis-trifluoromethosulfonimide (LiTFSI), lithium triflate (LiTFS), lithium difluorooxalate borate (LiDFOB), lithium dioxalate borate (LiBOB), lithium difluorophosphate (LiPOsFs), lithium difluorooxalate phosphate (LiDFOP), and lithium tetrafluorooxalate phosphate (LiTFOP). The concentration of the electrolyte in the electrolyte solution may be 0.5 mol/L to 5 mol/L.

In some embodiments, the solvent may be selected from at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate

(MP), ethyl propionate (EP), propyl propionate (PP), methyl butyrate (MB), ethyl butyrate (EB), 1, 4-butyrolactone (GBL), sulfolane (SF), dimethyl sulfone (MSM), methyl ethyl sulfone (EMS), and diethyl sulfone (ESE). The solvent may be present in an amount of 70 to 98% by weight based on the weight of the electrolyte solution.

In addition, additives may be included in the electrolyte solution. For example, the additive may include a negative pole membrane-forming additive, a positive pole membrane-forming additive, and may further include an additive capable of improving certain properties of the battery, for example, an additive for improving overcharge properties of the battery, an additive for improving high-temperature or low-temperature properties of the battery, etc.

The electrochemical device may further include a separator positioned between the positive pole piece and the negative pole piece for spacing the positive pole piece and the negative pole piece and preventing the positive pole piece and the negative pole piece from contacting and short-circuiting. The separator may be any of a variety of materials known in the art suitable for use as a separator for electrochemical energy storage devices. Specifically, the separator includes at least one of polyethylene, polypropylene, polyvinylidene fluoride, aramid, polyethylene terephthalate, polytetrafluoro ethylene, polyacrylonitrile, polyimide, polyamide, polyester, and natural fiber.

Electronic device

Examples of the present invention provide an electronic device including the electrochemical device described above. The electrochemical device serves as a power supply for the electronic device.

The electronic device refers to any device that may use electrical energy and convert it into one or more of mechanical energy, thermal energy, light energy, etc., such as an electric motor, an electric heat engine, an electric light source, etc. Specifically, the mobile device may include, but is not limited to, a mobile device, an electric vehicle, an electric train, a ship and a satellite, an energy storage system, etc. The mobile device may be a mobile phone, a notebook computer, an unmanned aerial vehicle, a sweeping robot, an electronic cigarette, etc. The electric vehicle may be a pure electric vehicle, a hybrid electric vehicle, a plug-in hybrid electric vehicle, an electric bicycle, an electric scooter, an electric golf cart, an electric truck, or the like.

The invention is further illustrated by the following specific examples.

Example 1

This example provides a lithium ion battery, and the specific preparation method is as follows.

(1) Preparation of positive pole piece

Step (1.1): According to the molar ratio of each element of Li, Ni, Co and Mn in the chemical formula of $LiNi_{0.9}Co_{0.05}Mn_{0.05}O_2$, nickel sulfate, cobalt sulfate, manganese sulfate and lithium carbonate are respectively weighed. The lithium carbonate is slightly in excess. Specifically, the ratio of the molar amount of lithium carbonate to the total molar amount of nickel sulfate, cobalt sulfate and manganese sulfate (Li/Me) is shown in Table 1.

Step (1.2): Nickel sulfate, cobalt sulfate and manganese sulfate are respectively dissolved in deionized water. Each metal solution is transfered to a reaction kettle through a pipeline to form a mixed metal solution, with nitrogen introduced as a protective gas. An aqueous NaOH solution is added as a precipitant and ammonia added as a complexing agent into the mixed metal solution. The ammonia concentration and addition amount of the solution is adjusted to control the pH of the solution (that is, the precursor reaction pH). After the reaction for 10 hours, the product is filtered and dried to obtain a ternary precursor. The precursor reaction pH and drying temperature (that is, the precursor drying temperature) are shown in Table 1.

Step (1.3): The ternary precursor with part of lithium carbonate (20wt.% of lithium carbonate) is mixed to perform pre-sintering. The pre-sintering atmosphere is an oxygen-containing atmosphere (oxygen flow rate is 120 $m^3$/h). The pre-sintering time is 3 hours, and the pre-sintering temperature is shown in table 1. After cooling, the pre-sintered product is mixed with the remaining lithium carbonate (80wt.% of lithium carbonate), and high-temperature sintering is performed. The high-temperature sintering atmosphere is an oxygen-containing atmosphere. The oxygen flow rate controlled, and the temperature and time of the high-temperature sintering are shown in table 1.

Step (1.4): The sintered material is subject to grinding, crushing and sieving to obtain a ternary positive active material.

Step (1.5): A positive active material, a binder (polyvinylidene fluoride) and a conductive agent (carbon black) are mixed in a mass ratio of 97:1:2. The mixture is added with -N-methylpyrrolidone (NMP), and the same is stirred under the action of a vacuum stirrer until the mixed system formed a positive slurry with uniform fluidity. The positive slurry is uniformly coated on the positive current collector (aluminium foil). The positive current collector coated with the positive slurry is transferred to an oven for drying, and then subjected to rolling and cutting to obtain a positive pole piece.

(2) Preparation of negative pole piece

An negative active material (artificial graphite), a conductive agent (CNT), a thickener (carboxymethyl cellulose, CMC) and a binder (styrene-butadiene rubber, SBR) are mixed in a mass ratio of 96:2:1:1. An negative slurry is prepared in a wet process by using a vacuum stirrer. The negative slurry is uniformly coated on a negative current collector (a copper foil). The negative current collector coated with the negative slurry is transferred into an oven for drying, and then rolled and cut to obtain a negative pole piece.

(3) Preparation of electrolyte solution

Ethylene carbonate (EC) and ethyl methyl carbonate (EMC) are mixed in a weight ratio of 1:1 to obtain an organic solvent, and then sufficiently dried lithium salt $LiPF_6$ is dissolved in the mixed organic solvent to prepare an electrolyte solution with a concentration of 1 mol/L.

(4) Preparation of separator

A polyethylene (PE) separator coated with ceramic and polyvinylidene fluoride is used.

(5) Preparation of battery

The prepared positive pole piece, separator and negative pole piece are wound to obtain a bare cell without liquid injection. The bare cell is placed in an outer packaging foil. The above-mentioned prepared electrolyte solution is injected into the dried bare cell. The same is subjected to vacuum packaging, standing, formation, shaping, sorting and other processes to obtain a lithium ion battery.

Examples 2-13 and Comparative examples 1-3

Examples 2 to 13 and Comparative Examples 1 to 3 respectively provide a lithium ion battery, and the preparation method thereof is similar to that of Example 1, except that when preparing the positive pole piece, the reaction pH of the precursor, the drying temperature of the precursor, Li/Me, the oxygen flow rate for high-temperature sintering, temperature and time are shown in Table 1.

Examples 14 and 16

Examples 14 and 16 respectively provide a lithium ion battery, the preparation method of which is similar to that of Example 1, except that:

(a) In step (1.1) and step (1.2), the precursor reaction pH, the precursor drying temperature, and Li/Me are shown in Table 1.

(b) In step (1.3), the ternary precursor is mixed with all the lithium carbonate, the pre-sintering, and directly sintered at high temperature. The high temperature sintering atmosphere is an oxygen-containing atmosphere. The oxygen flow rate controlled and the temperature and time of high temperature sintering are shown in Table 1.

Example 15

Examples 14 and 15 respectively provide a lithium ion battery, the preparation method of which is similar to that of Example 1, except that:

(a) In step (1.1) and step (1.2), the precursor reaction pH, the precursor drying temperature, and Li/Me are shown in Table 1;
(b) In step (1.3), the ternary precursor is mixed with part of lithium carbonate (30wt.% of lithium carbonate) to perform pre-sintering. The pre-sintering atmosphere is an oxygen-containing atmosphere (the oxygen flow rate is 120 m$^3$/h). The pre-sintering time is 3 hours. The pre-sintering temperature is shown in table 1. After cooling, the pre-sintered product is mixed with the remaining lithium carbonate (70wt.% lithium carbonate) and subjected to high-temperature sintering. The high-temperature sintering atmosphere is an oxygen-containing atmosphere. The oxygen flow rate controlled and the temperature and time of high-temperature sintering are shown in Table 1.

Examples 17 and 18

Examples 17 and 18 respectively provide a lithium ion battery, the preparation method of which is similar to that of Example 1, and details are described below.

Example 17: according to the molar ratio of each element of Li, Ni, Co and Mn in the chemical formula of $LiNi_{0.8}Co_{0.1}Mn_{0.1}O_2$, nickel sulphate, cobalt sulphate, manganese sulphate and lithium carbonate are respectively weighed. The lithium carbonate is slightly in excess. The control of the pH of precursor reaction, precursor drying temperature, Li/Me, oxygen flow rate for high-temperature sintering, temperature and time are shown in Table 1.

Example 18: according to the molar ratio of each element of Li, Ni, Co and Mn in the chemical formula of $LiNi_{0.7}Co_{0.2}Mn_{0.1}O_2$, nickel sulphate, cobalt sulphate, manganese sulphate and lithium carbonate are respectively weighed. The lithium carbonate is slightly in excess. The control of the pH of precursor reaction, precursor drying temperature, Li/Me, oxygen flow rate for high-temperature sintering, temperature and time are shown in Table 1.

Further, in each of the examples and comparative examples of the present invention, the roughness and porosity of the positive pole piece are adjusted by controlling the conditions of positive slurry coating and rolling, in combination with the use of different positive active materials.

Table 1

| | Precursor reaction pH | Precursor drying temperature (°C) | Li/Me | Pre-sintering temperature (°C) | Oxygen flow (m$^3$/h) | High temperature sintering temperature (°C) | High temperature sintering time (hour) |
|---|---|---|---|---|---|---|---|
| Example 1 | 9.7 | 125 | 1.25 | 350 | 200 | 800 | 10 |
| Example 2 | 9.3 | 130 | 1.20 | 420 | 230 | 750 | 8 |
| Example 3 | 10.5 | 120 | 1.15 | 330 | 210 | 780 | 8.5 |
| Example 4 | 10.1 | 115 | 1.18 | 300 | 220 | 830 | 12 |
| Example 5 | 9.4 | 125 | 1.15 | 400 | 160 | 810 | 9 |
| Example 6 | 11.2 | 130 | 1.23 | 380 | 200 | 820 | 11 |
| Example 7 | 11.4 | 115 | 1.35 | 350 | 180 | 790 | 12 |
| Example 8 | 9.5 | 125 | 1.15 | 370 | 150 | 700 | 10 |
| Example 9 | 10.3 | 115 | 1.32 | 330 | 250 | 850 | 8 |
| Example 10 | 9.9 | 130 | 1.28 | 320 | 170 | 770 | 9.5 |
| Example 11 | 9.6 | 115 | 1.12 | 380 | 190 | 740 | 9 |
| Example 12 | 9.7 | 130 | 1.15 | 400 | 210 | 750 | 11 |

(continued)

| | Precursor reaction pH | Precursor drying temperature (°C) | Li/Me | Pre-sintering temperature (°C) | Oxygen flow (m³/h) | High temperature sintering temperature (°C) | High temperature sintering time (hour) |
|---|---|---|---|---|---|---|---|
| Example 13 | 12.1 | 115 | 1.3 | 350 | 220 | 800 | 10.5 |
| Example 14 | 11.8 | 110 | 1.28 | / | 220 | 780 | 12 |
| Example 15 | 12.3 | 115 | 1.15 | 330 | 230 | 860 | 7.5 |
| Example 16 | 9.4 | 110 | 1.1 | / | 160 | 700 | 12.5 |
| Example 17 | 10.6 | 130 | 1.31 | 300 | 200 | 830 | 8.5 |
| Example 18 | 10.3 | 120 | 1.37 | 380 | 240 | 840 | 10 |
| Comparativ e Example 1 | 9.9 | 130 | 1.19 | 400 | 200 | 760 | 11 |
| Comparativ e Example 2 | 11.4 | 110 | 1.25 | 420 | 220 | 820 | 8 |
| Comparativ e Example 3 | 10.2 | 150 | 1.2 | 350 | 250 | 810 | 12 |

For each example and comparative example, the roughness and porosity of the positive pole piece, and the Dv50 and the particle size change rate of the positive active material are measured as shown in Table 2, and the above-mentioned measurement methods are as follows:

Dv50 and the particle size change rate of the positive active material

The lithium ion battery is disassembled to obtain a positive pole piece. The positive pole piece is soaked in DMC (dimethyl carbonate) at normal temperature for 60 minutes, is taken out, and is dried at normal temperature with a humidity of ≤ 15%. The positive active material layer is scraped off the surface of the current collector to perform calcination at 500°C for 3 hours, so as to remove the conductive agent, binder, surface side reaction products and residual electrolyte solution, and obtain the positive active material after post-treatment.

The positive active material is dispersed in an aqueous solution containing 3% sodium hexametaphosphate dispersant, and the same is continuously stirred with a glass rod for 10 cycles. All the samples are quickly poured into a sample pool for a particle size distribution instrument test to perform a Dv50 test, and obtain a Dv50 before pressure holding, recorded as $D_V50_{before\ pressure}$, namely, the $D_V50$ of the positive active material.

Then the solid-liquid separation and drying on the mixture containing the positive active material is performed to obtain the positive active material again, and the positive active material is kept under a pressure of 35 KN for 30 secnods by a powder compactor. After the pressure is maintained, the positive active material is taken out to perform a Dv50 test again in a particle size tester according to the above-mentioned method to obtain a Dv50 after the pressure is maintained, recorded as $D_V50_{after\ pressure}$.

The particle size change rate D of the positive active material can be obtained by calculation: $D = |(D_V50_{before\ pressure} - D_V50_{after\ pressure})|/D_V50_{before\ pressure} \times 100\%$.

Dv50 is the particle size in $\mu$m corresponding to 50% of the volume cumulative distribution percentage of the positive active material.

Roughness of positive pole piece

The lithium ion battery is disassembled to obtain a positive pole piece. The disassembled positive pole piece is soaked in a solvent (DMC) to clean the residual electrolyte solution. The solvent is replaced once every 4 hours. The residual electrolyte solution is continuously cleaned for 3 times. The positive pole piece is taken out and dried to obtain a pole piece sample.

A clean and flat 40 mm $\times$ 40 mm pole piece sample is selected and fixed on an atomic force microscope sample platform. An atomic force microscope probe contacts the surface of the pole piece sample and perform automatical scanning. After the test is completed, the roughness of the pole piece sample is obtained via a "image Ra" value in a "result" of a software test. At least three different places of the same pole piece sample are selected for parallel testing, and the average value is calculated, namely, the roughness of the positive pole piece.

Porosity of positive pole piece

The lithium ion battery is disassembled to obtain a positive pole piece. The disassembled positive pole piece is soaked in a solvent (DMC) to clean the residual electrolyte solution. The solvent is replaced once every 4 hours. The residual electrolyte solution is continuously cleaned for 3 times. The positive pole piece is taken out, dried and cutt into a 12mm-diameter wafer using a sheet punching machine to obtain a pole piece sample.

A 12 mm diameter wafer pole piece sample is weighted. The pole piece sample is placed in the hexadecane solution and soaked for 1 hour, and then taken out. After blotting the solution on the surface of filter paper, the pole piece sample is weighed again. The change rate of the mass of the pole piece sample before and after soaking in hexadecane is calculated, namely, the porosity of the positive pole piece.

Table 2

|  | $D_V50$ (μm) | D (%) | R (°) | P (%) | D/(R/5+P/2) |
|---|---|---|---|---|---|
| Example 1 | 6.5 | 68.1 | 114 | 22.77 | 1.99 |
| Example 2 | 6.9 | 66 | 135 | 18.21 | 1.83 |
| Example 3 | 5.8 | 71.5 | 103 | 20.35 | 2.32 |
| Example 4 | 6.1 | 77.8 | 110 | 19.3 | 2.46 |
| Example 5 | 7.2 | 72.2 | 147 | 24.2 | 1.74 |
| Example 6 | 4.8 | 62.8 | 113 | 28.5 | 1.70 |
| Example 7 | 4.4 | 83.4 | 95 | 33.29 | 2.34 |
| Example 8 | 6.8 | 76.7 | 174 | 16.52 | 1.78 |
| Example 9 | 5.5 | 79.6 | 102 | 18.74 | 2.67 |
| Example 10 | 7.5 | 65.1 | 145 | 24.94 | 1.57 |
| Example 11 | 7.7 | 83 | 191 | 33.7 | 1.51 |
| Example 12 | 7.3 | 62.1 | 172 | 34.53 | 1.20 |
| Example 13 | 4.0 | 78 | 83 | 21 | 2.88 |
| Example 14 | 4.1 | 88.9 | 86 | 17.17 | 3.45 |
| Example 15 | 4.6 | 93.6 | 121 | 13.3 | 3.03 |
| Example 16 | 7.4 | 86.1 | 230 | 39 | 1.31 |
| Example 17 | 6.2 | 63 | 97 | 21.1 | 2.10 |
| Example 18 | 6.4 | 60.5 | 83 | 18.9 | 2.32 |
| Comparative Example 1 | 7.1 | 61 | 198 | 33 | 1.09 |
| Comparative Example 2 | 5.1 | 89.6 | 81.3 | 15.2 | 3.76 |
| Comparative Example 3 | 6.2 | 46 | 127 | 32.1 | 1.11 |

The lithium ion batteries prepared in Examples and Comparative Examples are subjected to performance tests according to the following projects and methods.

(1) -10°C Cycle Capacity Retention Rate

The lithium ion battery is placed in an environment of -10°C, standing until the lithium ion battery reaches a constant temperature. At -10°C, the lithium ion battery is charged to 4.3V at a constant current of 0.2C, and the lithium ion battery is charged to a current of 0.05C at a constant voltage. The lithium ion battery is discharged to 2.75V at 0.33 C, and this capacity is taken as the initial capacity C0. This step is repeated for 500 cycles and the capacity of 500 cycles as is recorded as C1. The low temperature cycle capacity retention rate is calculated: low temperature cycle capacity retention rate = C1/C0 × 100%.

(2) 5°C rate discharge performance

The lithium ion battery is placed in a 5°C environment, standing until the lithium ion battery reaches a constant temperature. The lithium ion battery is charged to 4.3V at a constant current/constant voltage of 0.33C at 5°C, set aside for 10 minutes, and is discharged at a constant current of 0.33C to a cutoff voltage of 2.8V, and the discharge capacity is recorded as C3. The lithium ion battery is charged to 4.3V at a constant current/constant voltage of 0.33C at 5°C, set aside for 10 minutes, and is charged at a constant current of 2C to a cutoff voltage of 2.8V, and the discharge capacity is recorded as C4. The rate discharge capacity retention rate is calculated according to the following formula: rate discharge capacity retention rate = C4/C3 ×100%.

The test results are seen in Table 3.

Table 3

|  | -10°C Cycle Capacity Retention Rate (%) | 5°C rate discharge performance |
|---|---|---|
| Example 1 | 95.2% | 98.5% |
| Example 2 | 94.0% | 98.0% |
| Example 3 | 93.7% | 98.1% |
| Example 4 | 93.1% | 98.9% |
| Example 5 | 94.4% | 99.1% |
| Example 6 | 90.8% | 96.2% |
| Example 7 | 91.6% | 96.5% |
| Example 8 | 91.9% | 97.8% |
| Example 9 | 89.0% | 94.9% |
| Example 10 | 88.5% | 95.4% |
| Example 11 | 85.5% | 94.2% |
| Example 12 | 86.2% | 93.6% |
| Example 13 | 86.8% | 92.9% |
| Example 14 | 87.3% | 92.5% |
| Example 15 | 84.6% | 91.0% |
| Example 16 | 83.9% | 91.2% |
| Example 17 | 89.5% | 95.3% |
| Example 18 | 88.1% | 95.8% |
| Comparative Example 1 | 70.3% | 84.2% |
| Comparative Example 2 | 72.7% | 82.1% |
| Comparative Example 3 | 66.8% | 84.5% |

As for the lithium ion battery prepared in each example of the present invention, the capacity retention rate after 500 cycles at -10°C is ≥ 83%, and the capacity retention rate at 2C rate discharge at 5°C is ≥ 91%. It can be seen that the lithium ion battery including the positive pole piece of the present invention has significantly improved low-temperature electrochemical performance, in particular, excellent low-temperature cyclic capacity retention rate and low-temperature high-rate discharge performance.

From Examples 6 to 8 with respect to Examples 1 to 5, and Examples 11 to 14 with respect to Comparative Examples 9 and 10, it can be seen that the low-temperature cycle capacity retention rate and the low-temperature high-rate discharge performance of the lithium ion battery are relatively superior when the particle size change rate of the positive active material, and the roughness and the porosity of the positive pole piece satisfy the preferred range of the present invention.

From Examples 9 to 10 in combination with Examples 1 to 5, it can be seen that when the positive pole piece satisfies a value of D/(R/5 + P/2) of 1.7 to 2.5, the low-temperature cycle capacity retention rate and the low-temperature high-rate discharge performance of the lithium ion battery are relatively higher.

According to the test results of Comparative Examples 1 to 3, even if the roughness and the porosity of the positive pole piece, or the particle size change rate of the positive active material are in appropriate ranges, respectively, when the D/(R/5 + P/2) value of the positive pole piece exceeds the range of 1.2 to 3.5, the lithium ion battery including the positive pole piece has poor electrochemical performance at low temperature, with a low-temperature cycle capacity retention rate of not more than 72.7% and a low-temperature rate discharge capacity retention rate of not more than 84.5%.

**Claims**

1. A positive pole piece, comprising a positive current collector and a positive active material layer provided on at least one surface of the positive current collector, **characterized in that**

   the positive active material layer comprises a positive active material including a ternary positive material;
   a particle size change rate of the positive active material, a roughness of the positive pole piece and a porosity of the positive pole piece satisfy following relationship:

   $$1.2 \leq D/(R/5+P/2) \leq 3.5;$$

   where D is the particle size change rate of Dv50 in % before and after the positive active material is held for 30 seconds at a pressure of 35 KN, and Dv50 is a particle size corresponding to 50% of a volume cumulative distribution percentage of the positive active material;
   R is the roughness of the positive pole piece, in nm; and
   P is the porosity of the positive pole piece in %.

2. The positive pole piece according to claim 1, **characterized in that** the particle size change rate of the positive active material, the roughness of the positive pole piece, and the porosity of the positive pole piece satisfy following relationship: $1.7 \leq D/(R/5+P/2) \leq 2.5$.

3. The positive pole piece according to claim 1, **characterized in that** D ranges from 60% to 90%.

4. The positive pole piece according to claim 3, **characterized in that** D ranges from 65% to 80%.

5. The positive pole piece according to claim 1, **characterized in that** R ranges from 80 nm to 200 nm.

6. The positive pole piece according to claim 5, **characterized in that** R ranges from 100 nm to 150 nm.

7. The positive pole piece according to claim 1, **characterized in that** P ranges from 15% to 35%.

8. The positive pole piece according to claim 7, **characterized in that** P ranges from 18% to 25%.

9. The positive pole piece according to claim 1, **characterized in that** Dv50 ranges from 3 $\mu$m to 8 $\mu$m.

10. The positive pole piece according to claim 1, **characterized in that** the ternary positive material has a formula of $LiNi_xCo_yMn_{(1-x-y)}O_2$, where $0.7 \leq x < 1$, $0 < y \leq 0.3$, and $0 < x+y < 1$.

11. An electrochemical device, **characterized by** comprising the positive pole piece according to any one of claims 1 to 10.

12. An electronic device, **characterized by** comprising the electrochemical device according to claim 11.

Europäisches
Patentamt

European
Patent Office

Office européen
des brevets

# EUROPEAN SEARCH REPORT

Application Number

EP 24 18 8545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 859 824 A1 (CONTEMPORARY AMPEREX TECHNOLOGY CO LTD [CN]) 4 August 2021 (2021-08-04) * 0019, 0045, example 6, table 1 * ----- | 1-4,7-12 | INV. H01M4/525 H01M10/052 H01M4/131 |
| X | JP 6 433086 B2 (NGK INSULATORS LTD) 5 December 2018 (2018-12-05) * 0043, 0057, examples 13 and 14, table 1 * ----- | 1,5,6 | ADD. H01M4/02 |

TECHNICAL FIELDS
SEARCHED        (IPC)

H01M

The present search report has been drawn up for all claims

| Place of search | Date of completion of the search | Examiner |
|---|---|---|
| Munich | 12 December 2024 | Gregori, Giuliano |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 24 18 8545

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2024

| Patent document cited in search report | | Publication date | Patent family member(s) | | Publication date |
|---|---|---|---|---|---|
| EP 3859824 | A1 | 04-08-2021 | CN | 114245940 A | 25-03-2022 |
| | | | EP | 3859824 A1 | 04-08-2021 |
| | | | US | 2021175511 A1 | 10-06-2021 |
| | | | WO | 2021109080 A1 | 10-06-2021 |
| JP 6433086 | B2 | 05-12-2018 | JP | 6433086 B2 | 05-12-2018 |
| | | | JP | WO2015151566 A1 | 13-04-2017 |
| | | | WO | 2015151566 A1 | 08-10-2015 |

EPO FORM P0459

For more details about this annex : see Official Journal of the European Patent Office, No. 12/82